# EUROPÄISCHE PATENTSCHRIFT

(11) **EP 1 019 663 B1**
(45) Veröffentlichungstag und Bekanntmachung des Hinweises auf die Patenterteilung: **25.09.2002**
(21) Anmeldenummer: 98937389.9
(22) Anmeldetag: 20.08.1998
(51) Int. Cl.: F26B 17/12

(54) **TROCKNER-WÄRMETAUSCHER**
DRIER-HEAT-EXCHANGER
ECHANGEUR THERMIQUE-SECHOIR

(30) Priorität: 01.10.1997 DE 19743461
(43) Veröffentlichungstag der Anmeldung: 19.07.2000
(73) Patentinhaber: BÜHLER AG, 9240 Uzwil (CH)
(72) Erfinder: GEISSBUEHLER, Hans, CH-9524 Zuzwil (CH); TERRASI, Filippo, CH-9244 Niederuzwil (CH)
(86) Internationale Anmeldenummer: CH9800353
(87) Internationale Veröffentlichungsnummer: WO99018404

(56) Entgegenhaltungen:
- EP-A- 0 124 294
- DE-B- 1 067 372
- DE-C- 183 963
- FR-A- 867 088
- FR-A- 1 429 782
- GB-A- 763 879
- US-A- 2 078 515
- US-A- 2 474 199
- US-A- 3 875 683
- US-A- 5 033 208

## Beschreibung

Die Erfindung betrifft einen Trockner-Wärmetauscher gemäß den Merkmalen des Oberbegriffs des Anspruchs 1.

Ein derartiger Trockner-Wärmetauscher ist zum Beispiel aus der US-A-5 033 208 bekannt.

Verfahren und Vorrichtungen zum Kristallisieren und Nachkondensieren von PET in fester Phase sind hinlänglich bekannt. Die Nachkondensation von PET in fester Phase (SSP) erfolgt bei Temperaturen oberhalb 200 °C über mehrere Stunden hinweg in geeigneten Reaktoren bzw. Trocknern. Das Problem besteht darin, bei möglichst geringem Aufwand einen hohen Durchsatz und hohe Qualität des Materials zu erzielen. Das verwendete Prozess dient der gleichmässigen Erwärmung des PET u. a. und führt zugleich Reaktionsprodukte ab.

Es ist bekannt, Dächertrockner oder Säulentrockner zur SSP-Behandlung von PET-Granulaten zu verwenden. So beschreibt die DE-A-4300913 einen Vorerhitzer mit dachförmigen Einbauten, um einen gleichmässigen Gasfluss im Gegenstrom zu erzielen. Zugleich sollen die Einbauten auch eine Vergleichmässigung des Produktflusses (Relativbewegung und gegen Verkleben) und eine Verringerung des Schüttdruckes erreichen. Bekannt sind ebenfalls Schachtreaktoren mit netzartigen Einbauten (DE-C-2753543) u. a. Der Fertigungsaufwand für derartige Einbauten ist hoch.

Eine Vorrichtung zum Entstauben und Klassieren körniger Stoffe ist gemäss CH-PS 314655 beschrieben. Hierbei wird das herabfallende Produkt gleichmässig mittels eines aufsteigenden Luftstromes entstaubt. Die Luft tritt seitlich neben bzw. unter einem Verdrängungskörper in die Vorrichtung ein.

Bekannt sind ebenfalls Trockner für Nüsse, Kakaobohnen u. dgl., die im wesentlichen aus einem Oberteil mit zwei Heizzonen und einem Unterteil mit Kühlzonen bestehen.

Das Produkt passiert den Trockner/Röster von oben nach unten in einem schmalen Kanal, dessen Längsseiten aus Gitterrosten mit Drahtgewebebespannung bestehen. Die Kanalbreite ist veränderlich und die Gitterroste sind herausnehmbar. Von Nachteil ist die geringe Baugrösse, die hohe Produktdurchsätze bei langer Verweilzeit nicht ermöglicht. Ein einfaches "upscaling" ist verfahrenstechnisch nicht möglich. Ein solcher Trockner/Röster wird mit Luft betrieben und ist undicht. Die Problematik des Agglomerierens spielt bei den zu behandelnden Produkten keine Rolle, die zudem vergleichs- weise gross sind und deren Schüttdichte geringer ist.

Es sind ferner Trockner-Wärmetauscher zur thermischen Behandlung körniger Schüttgüter bekannt, bestehend aus einem Gehäuse, mit einem Produkteintritt und einem Produktaustritt, sowie Stutzen für den Ein- und Austritt von Prozessgas und einem luftdurchlässigen Kanal zur Behandlung des Granulates, wobei der Kanal durch Elemente begrenzt ist, die Öffnungen aufweisen, wie es z.B. in der US-A-5 033 208, der US-A-3 875683 und der US-A-2 474199 offenbart ist.

Die Aufgabe der Erfindung besteht darin, in Weiterbildung des vorgenannten Standes der Technik eine Trockner für Granulat, insbesondere aus PET, PEN oder PA zu deren thermischer Vorbehandlung zu entwickeln, der einen Massenfluss mit kurzer bis längerer Verweilzeit und bei grosser Bauhöhe ermöglicht.

Insbesondere soll in einer schmalen Produktsäule die Durchströmung derartiger Schüttgüter mit geringem Schüttdruck erreicht werden.

Diese Aufgabe wird durch die Merkmale des Anspruchs 1 gelöst.

Die Kanalbreite beträgt vorzugsweise 25 bis 40 cm, bei einer Länge bis ca. 3,5 m und einer Höhe von bis zu oder mehr als 15 m. Im unteren Bereich des Kanals können ein Verdrängungskörper und/oder Umlenkelemente angeordnet sein.

Möglich wird ein grosser Gasdurchsatz ohne Lockerung und damit eine kurze Aufheizzeit, verbunden mit kostengünstiger, geringer Baugrösse.

Es ist notwendig, dass ein feinverteilter Gasdurchtritt, d.h. eine gute Durchströmung des Produktes bei abteilweiser Begasung (Kreuzstrom, Gegenstrom) und gegenläufig zum Produktstrom erreicht wird.

Die Verweilzeit des Produktes beträgt meist 1-2 Stunden, um eine gute Durchströmung des Produktes zu erreichen, einschliesslich eines relativ grossen bis kleineren Druckverlustes, weisen die Lochbleche kleine Löcher von nur wenigen mm Nennmass auf, bzw. anstelle eigentlicher Lochbleche werden Bleche mit feinen, schlitzförmigen Öffnungen verwendet (ganz oder teilweise die Kanaloberfläche abdeckend).

Die äussere Ummantelung ist rechteckig oder rund (Druckstossfestigkeit, Instandhaltung). Weitere Einbauten parallel zur Gasströmung können im Kanal angeordnet werden, z. B. wechselweise abwärts geneigte Bleche, um ein Kleben des Granulates infolge mangelnder Bewegung zu vermeiden.

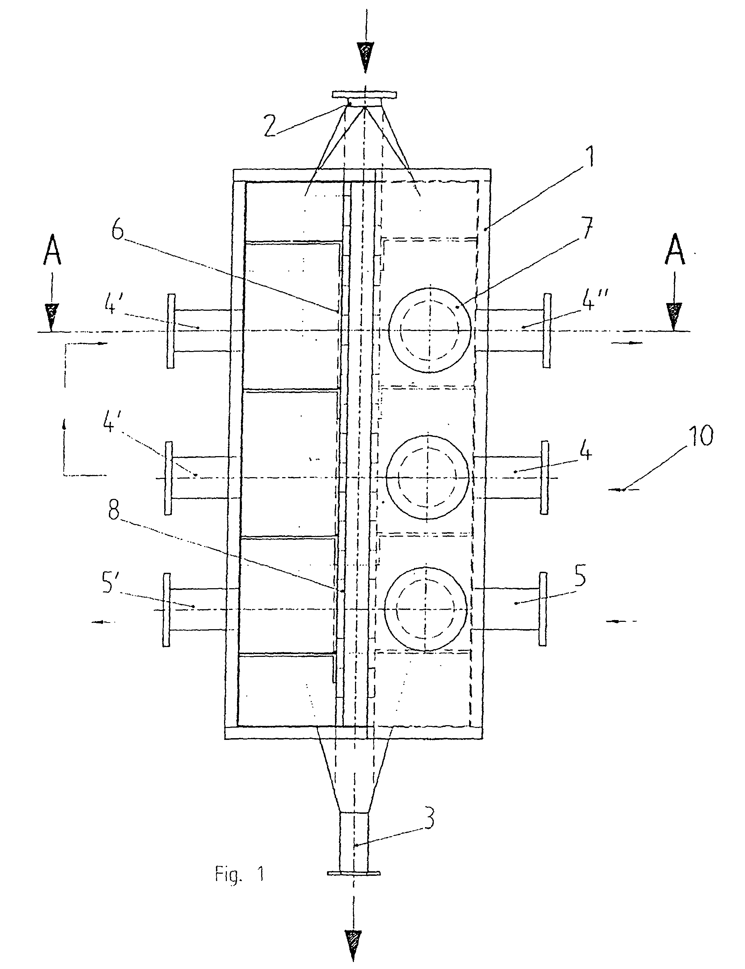

Die Erfindung soll nachfolgend in einem Ausführungsbeispiel an Hand einer Zeichnung näher beschrieben werden. In der Zeichnung zeigen die
- Fig. 1:: einen Längsschnitt des Trockners

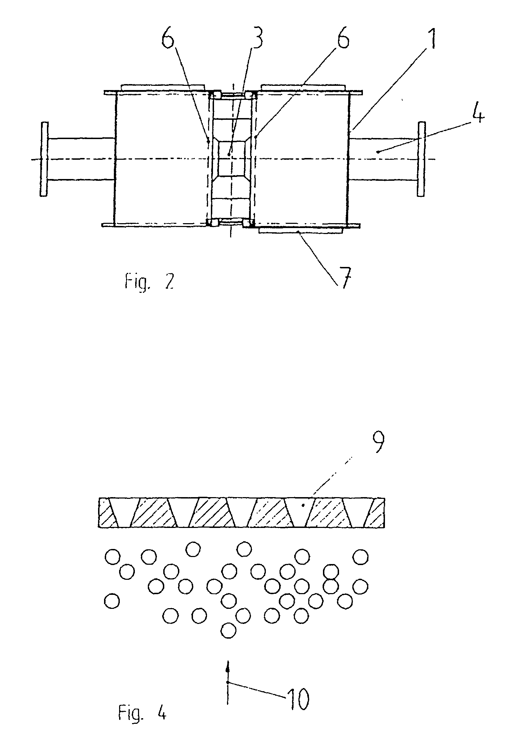

- Fig. 2:: eine Schnittdarstellung nach Fig. 1
- Fig. 3:: die Wandung des Kanals
- Fig. 4:: die Wandung des Kanals im Querschnitt

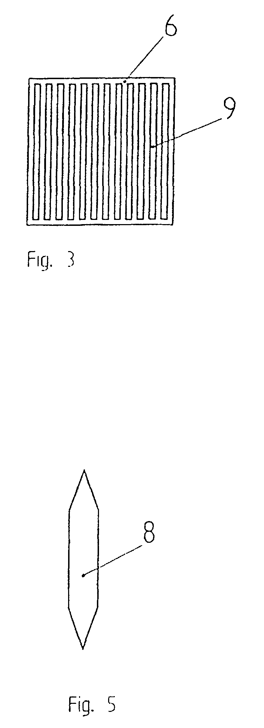

- Fig. 5:: eine Ausführungsform eines Hindernisses (Einbauten) im Kanal

Der Trockner-Wärmetauscher besteht aus einem rechteckigen Gehäuse 1 mit einem Produkteintritt 2 und einem Produktaustritt 3 sowie Stutzen 4 und 5 für den Ein- und Austritt von Heiz- und Kühlgas.

Im Innern ist zwischen Produkteintritt 2 und Produktaustritt 3 ein Kanal zur Behandlung des Produktes. Dieser Kanal weist luftdurchlässige Bleche 6 auf, die über die gesamte Breite des Gehäuses 1 reichen und somit den Kanal begrenzen. Im Bedarfsfall können diese Bleche 6 noch flexibel angeordnet sein, um die Kanalbreite zu variieren.
Die Bleche 6 sind vorteilhaft für Gaseintritt und Gasaustritt verschieden je nach Aufgabe für die Gasverteilung oder Verhinderung von Verstopfungen infolge Staubes und sie weisen in Produktflussrichtung im Kanal Hindernisse in Form gewellter oder messerförmiger Einbauten (8) auf und/oder die Bleche 6 können auch selbst gewellt sein. Die Bleche 6 selbst weisen ebenfalls in Produktflussrichtung Öffnungen 9 (Löcher, Schlitze oder Gitter) auf , durch die Prozessgas und Staubpartikel u. dgl. Ungehindert austreten können. Zugleich sind diese Öffnungen 9 so bemessen, dass gröbere Partikel, wie z. B. Engelshaare nicht hindurchtreten können und eine Selbstreinigung der Öffnungen 9 durch das Granulat erfolgt. Ein Verschmutzen der Öffnungen 9 wird zuverlässig verhindert, z. B. durch eine konische Ausgestaltung der Öffnungen 9.

Das Produkt, z. B. ein PET-Granulat gelangt durch den Produkteintritt 2 in den, von den Blechen 6 begrenzten Kanal und durchläuft diesen Kanal langsam in Richtung Produktaustritt 3. Durch den Stutzen 4 dringt Heizgas 10, z. B. N₂ durch die Öffnungen 9 der Bleche 6 in den Kanal und durchströmt das Granulat im Kreuzstrom bzw. Gegenstrom. Über die Stutzen 4' kann das Heizgas 10 im gesamten Bereich des Kanals zirkulieren. Durch den Stutzen 4" kann verbrauchtes Heizgas 10 austreten und in bekannter Weise rezykliert werden. Durch den Stutzen 5 kann ein Kühlgas eintreten und das Granulat analog durchströmen sowie durch den Stutzen 5' den Trockner wieder verlassen.

Erreicht wird eine hohe Gasgeschwindigkeit ohne Aufwirbelung des Produktes. Dies ergibt kurze Aufheizzeiten bzw. hohen Produktdurchsatz. Die Verfahrensführung des Trocknens/Nachkondensierens und Kühlens erfolgt in allgemein bekannter Weise bzgl. Temperaturführung und Verweildauer des Granulates im Kanal.

Durch Schaugläser/Serviceöffnungen 7 kann der Prozess verfolgt werden.

Das Granulat aus PET, PEN, PA o. dgl. Ist als Ausgangsmaterial homogen und arm an Verunreinigungen und ist nicht agglomeriert. Nach der Behandlung im Trockner ist dieses Granulat kristallisiert und weist eine, um 2-5 % höhere Schüttdichte sowie homogene Granulatform auf. Die Temperaturverteilung ist homogen und evtl. low melting points sind nicht mehr ersichtlich.

Erreicht wurde dies durch die wechselseitige Durchströmung (Kreuz- oder Gegenstrom) des Produktes mit dem Heizgas 10 in einer schmalen Produktsäule mit geringem Schüttdruck. Letzteres wird durch die Einbauten 8 unterstützt. Die vergleichsweise feinen Öffnungen 9 der Bleche 6 bewirken durch den Druckverlust des Heizgases eine gute Gasverteilung auf den Kanalwänden.

### Verzeichnis der Kurzzeichen

- 1: Gehäuse
- 2: Produkteintritt
- 3: Produktaustritt
- 4: Stutzen
- 4': Stutzen
- 4": Stutzen
- 5: Stutzen
- 5': Stutzen
- 6: Blech
- 7: Schauglas/Serviceöffnung
- 8: Einbauten
- 9: Öffnung
- 10: Heizgas

## Patentansprüche

1. Trockner-Wärmetauscher zur thermischen Behandlung körniger Schüttgüter, insbesondere Trocknung bzw. SSP-Vorbehandlung, z.B. von PET-Granulat u. dgl. bestehend aus einem Gehäuse (1), mit einem Produkteintritt (2) und einem Produktaustritt (3), sowie Stutzen (4, 5) für den Ein- und Austritt von Prozessgas und einem luftdurchlässigen Kanal zur Behandlung des Granulates, wobei der Kanal durch Elemente begrenzt ist, die Öffnungen (9) aufweisen und wobei die Grösse der Öffnungen (9) kleiner als die Abmessung des Granulates ist, **dadurch gekennzeichnet, dass** im Kanal Hindernisse in Form von Einbauten (8) angeordnet sind.

2. Trockner nach Anspruch 1, **dadurch gekennzeichnet, dass** die Elemente Bleche (6) sind, deren Öffnungen (9) loch- oder schlitzförmig sind.

3. Trockner nach Anspruch 1 und 2, **dadurch gekennzeichnet, dass** die Öffnungen (9) schlitzförmig und konisch sind, wobei die Breite der Öffnung (9) auf der produktberührenden Seite des Bleches (6) geringer ist als auf der produktabgewandten Seite.

4. Trockner nach Anspruch 1, **dadurch gekennzeichnet, dass** der Kanal einen schlitz-, quader- oder ringförmigen Querschnitt aufweist.

5. Trockner nach Anspruch 1, **dadurch gekennzeichnet, dass** im Bereich des Produkteintritts (2) ein statischer Verteiler angeordnet ist.

6. Trockner nach einem der Ansprüche 1 bis 3, **dadurch gekennzeichnet, dass** die Öffnungen (9) schlitzförmig in Flussrichtung des Produktes angeordnet sind.

## Claims

1. A dryer-heat exchanger for the thermal treatment of granular bulk material, in particular drying or SSP pretreatment, e.g., of PET granulate and the like, consisting of a casing (1), with a product inlet (2) and a product outlet (3), as well as nozzles (4, 5) for the entry and exit of process gas, and an air-permeable channel for treating the granulate, wherein the channel is bounded by elements with openings (9), and wherein the size of the openings (9) is smaller than the dimensions of the granulate, **characterized in that** obstacles in the form of built-ins (8) are arranged in the channel.

2. The dryer according to claim 1, **characterized in that** the elements are plates (6) whose openings (9) resemble holes or slots.

3. The dryer according to claim 1 and 2, **characterized in that** the openings (9) are slotted and conical, wherein the width of the opening (9) is smaller on the side of the plate (6) that contacts the product than on the side facing away from the product.

4. The dryer according to claim 1, **characterized in that** the channel has a slotted, square or annular cross-section.

5. The dryer according to claim 1, **characterized in that** a static distributor is arranged in the area of the product inlet (2).

6. The dryer according to one of claims 1 to 3, **characterized in that** the openings (9) are arranged as a slot in the direction of flow of the product.

## Revendications

1. Séchoir-échangeur de chaleur pour le traitement thermique de marchandises granuleuses en vrac, en particulier le séchage ou pré-traitement SSP, par exemple de granulés de PET et similaires, consistant en un boîtier (1) avec une entrée de produit (2) et une sortie de produit (3) ainsi que des tubulures (4, 5) pour l'entrée et la sortie de gaz de traitement et en un canal laissant passer l'air pour le traitement des granulés, le canal étant délimité par des éléments qui présentent des orifices (9) et la dimension des orifices (9) étant plus faible que la dimension des granulés, **caractérisé en ce que**, dans le canal, des obstacles sont disposés sous la forme d'éléments intégrés (8).

2. Séchoir selon la revendication 1, **caractérisé en ce que** les éléments sont des tôles (6) dont les orifices (9) sont en forme de trous ou de fentes.

3. Séchoir selon la revendication 1 ou 2, **caractérisé en ce que** les orifices (9) sont en forme de fentes et coniques, la largeur de l'orifice (9) étant plus faible du côté de la tôle (6) touchant le produit que du côté écarté du produit.

4. Séchoir selon la revendication 1, **caractérisé en ce que** le canal présente une section transversale en forme de fente, de carré ou de cercle.

5. Séchoir selon la revendication 1, **caractérisé en ce que**, dans la zone de l'entrée de produit (2), un répartiteur statique est disposé.

6. Séchoir selon une des revendications 1 à 3, **caractérisé en ce que** les orifices (9) sont en forme de fente dans le sens d'écoulement du produit.
